# EUROPÄISCHE PATENTSCHRIFT

(11) **EP 1 782 225 B1**
(45) Veröffentlichungstag und Bekanntmachung des Hinweises auf die Patenterteilung: **12.08.2009**
(21) Anmeldenummer: 05769798.9
(22) Anmeldetag: 21.06.2005
(51) Int. Cl.: G06F 13/40

(54) **VERFAHREN ZUR KONTROLLE VON ÜBERTRAGUNGEN EINER BIDIREKTIONALEN SCHNITTSTELLE**
METHOD FOR CONTROLLING TRANSMISSIONS OF A BI-DIRECTIONAL INTERFACE
PROCEDE POUR CONTROLER DES TRANSMISSIONS D'UNE INTERFACE BIDIRECTIONNELLE

(30) Priorität: 23.07.2004 DE 102004035752
(43) Veröffentlichungstag der Anmeldung: 09.05.2007
(73) Patentinhaber: TridonicAtco GmbH & Co. KG, 6851 Dornbirn (AT)
(72) Erfinder: BÖCKLE, Reinhard, A-6841 Mäder (AT); STRIETZEL, Carsten, A-6800 Feldkirch (AT); JUEN, Reinhold, A-6850 Dornbirn (AT)
(74) Vertreter: Rupp, Christian
(86) Internationale Anmeldenummer: PCT/EP2005/006708
(87) Internationale Veröffentlichungsnummer: WO 2006/010416

(56) Entgegenhaltungen:
- WO-A-02/082618
- DE-A1- 3 533 278
- GB-A- 2 352 150
- US-A1- 2002 099 451

## Beschreibung

Die vorliegende Erfindung betrifft ein Verfahren zur Kontrolle von Übertragungen in einem Sendezweig einer bidirektionalen Schnittstelle, insbesondere einer digitalen bidirektionalen Schnittstelle. Ferner betrifft die vorliegende Erfindung ein Lampenbetriebsgerät zum Betreiben einer Lampe, welche eine entsprechende bidirektionale Schnittstelle zum Datenaustausch aufweist.

Beleuchtungssysteme zur Beleuchtung großer Komplexe oder Gebäude, bei denen mehrere dezentral verteilt angeordnete Leuchten durch eine zentrale Steuereinheit angesteuert werden, erfordern aufgrund der Vielzahl der zur Verfügung stehenden Funktionen die Möglichkeit eines umfangreichen und zuverlässigen Datenaustauschs. Während es bei früheren Beleuchtungssystemen lediglich bekannt war, von einer zentralen Steuereinheit aus Ein- und Ausschaltbefehle zu den verschiedenen Leuchten zu übermitteln, sehen moderne Beleuchtungssysteme nunmehr auch die Möglichkeit eines Datentransfers von den Leuchten zu der zentralen Steuereinheit vor, um beispielsweise Informationen hinsichtlich des aktuellen Betriebszustands sowie Fehlerinformationen zu übermitteln. Die zum Betrieb in einem derartigen Beleuchtungssystem vorgesehenen Leuchten bzw. Lampenbetriebsgeräte weisen dementsprechend eine Kommunikationsschnittstelle auf, die nicht nur zum Datenempfang ausgestaltet ist sondern auch in der Lage ist, selbst Informationen auf ein Busleitungssystem zu senden.

Die in letzter Zeit neu entwickelten Beleuchtungssysteme bzw. Lampenbetriebsgeräte arbeiten überwiegend nach dem sogenannten DALI-Standard. Bei diesem DALI (Digital Addressable Lighting Interface)-Standard handelt es sich eine neuartige einfache und anwenderfreundliche Schnittstelle zur Realisierung intelligenter und funktionaler Lichtmanagement-Systeme. Ein wesentliches Merkmal des DALI-Standards ist, daß die Steuerbefehle und Informationen in digitaler Weise übertragen werden und dementsprechend die verschiedenen Geräte des Systems eine bidirektionale digitale Schnittstelle aufweisen.

Bei der Übertragung digitaler Steuersignale zur Lichtsteuerung ist es erforderlich, daß die von den Schnittstellen realisierten Bitlängen in einem bestimmte Bereich gehalten werden. Beispielsweise ist entsprechend dem DALI-Standard lediglich ein Toleranzbereich von ±10% gegenüber der idealen Bitlänge von 416 µsec zulässig. Da allerdings die zum Einsatz kommenden Schnittstelle üblicherweise möglichst kostengünstig aufgebaut sind und insbesondere der für die Realisierung der Bitlängen verantwortliche Sendezweig deutlich komplexer und daher bauteil-toleranzanfälliger als der Empfangszeit ausgestaltet ist, besteht das Problem, daß diese Forderung nur schwer eingehalten werden kann. Insbesondere Temperatureffekte und Intoleranzen der Bauelemente können dazu führen, daß im schlechtesten Fall die von dem Sendezweig einer Schnittstelle realisierte Bitlänge außerhalb des zulässigen Bereichs liegt, was einen Datenaustausch verhindern würde.

Ähnliche Probleme bestehen auch bei nicht-digitalen bidirektionalen Schnittstellen, bei denen die von dem Sendezweig ausgegebenen Signale ebenfalls bestimmte Anforderungen erfüllen müssen, die - aufgrund des oben genannten Trends zur Kosteneinsparung - nur schwer einzuhalten sind.

Aus der DE 35 33 278 A1 ist eine Schaltungsanordnung zur potentialfreien Signalübertragung bekannt, bei der ein Transformator eingesetzt wird, um Signale aus einem Elektronikteil auf eine Leistungsendstufe zu übertragen. Rückmeldesignale über Störungen aus der Leistungsendstufe werden über denselben Transformator in umgekehrter Richtung übertragen, durch eine Auswerteschaltung ausgewertet und zur Rücksetzung des Elektronikteils verwendet.

Der vorliegenden Erfindung liegt dementsprechend die Aufgabe zugrunde, eine Möglichkeit anzugeben, die von dem Sendezweig einer bidirektionalen Schnittstelle übermittelten Signale oder Daten in einfacher Weise zu kontrollieren und ggf. erforderliche Korrekturmaßnahmen durchzuführen. Diese Verbesserungen sollen allerdings möglichst ohne größeren Aufwand und ohne eine Erweiterung der Schnittstellen-Hardware ermöglicht werden.

Erfindungsgemäß wird diese Aufgabe durch die Merkmale der unabhängigen Ansprüche gelöst. Die abhängigen Ansprüche bilden dabei den zentralen Gedanken der Erfindung in besonders vorteilhafter Weise weiter.

Gemäß einem ersten Aspekt der vorliegenden Erfindung ist dementsprechend bei einem Verfahren zur Kontrolle von Übertragungen in einem Sendezweig einer bidirektionalen Schnittstelle, die neben dem Sendezweig auch einen mit dem Sendezweig in Verbindung stehenden Empfangszweig aufweist, vorgesehen, daß die mittels des Sendezweigs ausgesendeten Informationen über den Empfangszweig derselben Schnittstelle empfangen und definierte Eigenschaften dieser gesendeten Informationen ausgewertet werden.

Erfindungsgemäß ist also vorgesehen, daß der weniger toleranzanfällige Empfangszweig die von dem Sendezweig übermittelten Informationen gleichzeitig mitliest und diese Informationen auf eventuelle Fehler hin überprüft, wobei abhängig von der Auswertung der gesendeten Informationen dann bestimmte Parameter des Sendezweigs derart eingestellt werden können, daß zukünftige Informationen unter Verwendung dieser Parameter ausgesendet werden. Handelt es sich beispielsweise bei der Schnittstelle um eine digitale Schnittstelle, kann insbesondere vorgesehen sein, daß die definierten ausgewerteten Eigenschaften die zeitliche Bitlänge der gesendeten Informationen umfassen, wobei ggf. eine Korrektur derart durchgeführt werden, daß die Bitlänge den entsprechenden Anforderungen des Datenaustausch-Protokolls genügt.

Gemäß einer ersten Variante für eine eventuell erforderliche Korrektur der zeitlichen Bitlänge kann dabei die zeitliche Bitlänge durch Starten eines Zählers bei einer ersten Flanke und Stoppen des Zählers bei der darauf folgenden Flanke erfaßt werden, wobei dann abhängig von den hierbei erhaltenen Informationen die Bitlängen folgender Übertragungen softwaremäßig korrigiert werden können. Bei einer zweiten Variante kann die zeitliche Bitlänge ausgehend von der zeitlichen Differenz zwischen der Eingabe der Startflanke des Bits in der Schnittstelle und der Weitergabe dieser Startflanke auf einen angeschlossenen Bus durch den Empfangszweig ermittelt und dementsprechend die erforderliche Zeitdauer für die Bitlänge korrigiert werden. Beide Varianten bieten den Vorteil, daß für eine korrekte Einstellung der Bitlänge keine zusätzlichen Hardwareelemente in der Schnittstelle erforderlich sind sondern stattdessen sämtliche Korrekturen softwaremäßig durchgeführt werden können.

Ein zweiter Aspekt der vorliegenden Erfindung betrifft dementsprechend ein Verfahren zur Kontrolle der zeitlichen Bitlänge in einem Sendezweig einer bidirektionalen digitalen Schnittstelle, die neben dem Sendezweig auch einen mit dem Sendezweig in Verbindung stehenden Empfangszweig aufweist, wobei bei Aussenden von digitalen Informationen mittels des Sendezweigs über den Empfangszweig der Schnittstelle die zeitlichen Bitlängen der gesendeten Information ausgewertet werden und in vorteilhafter Weise ggf. eine Korrektur der Bitlänge durchgeführt wird.

Des weiteren bezieht sich die vorliegende Erfindung auf eine bidirektionale Schnittstelle, die einen Sendezweig zur Aussendung von Signalen über einen Bus sowie einen Empfangszweig zum Empfangen von Signalen von dem Bus aufweist, wobei der Empfangszweig mit dem Sendezweig derart verbunden ist, daß ein von dem Sendezweig ausgesendetes Signal über den Empfangszweig mitlesbar ist und darüber hinaus eine Steuereinheit vorgesehen ist, die über den Sendezweig ausgesendete Signale über den Empfangszweig mitliest. Die Steuereinheit ist vorzugsweise dazu ausgelegt, abhängig vom Ergebnis der Auswertung Parameter des Sendezweigs einzustellen, wobei für den Fall, daß es sich um eine digitale Schnittstelle handelt, wiederum vorzugsweise die definierten ausgewerteten Eigenschaften die zeitliche Bitlänge der gesendeten Information umfassen.

Schließlich betrifft eine weiterer Aspekt der vorliegenden Erfindung auch eine bidirektionale digitale Schnittstelle mit einem Sendezweig zur Aussendung von Signalen über einen Bus sowie einen Empfangszweig zum Empfangen von Signalen von dem Bus, wobei der Empfangszweig mit dem Sendezweig derart verbunden ist, daß von dem Sendezweig ausgesendete Signale über den Empfangszweig mitgelesen werden, und wobei ferner eine Steuereinheit vorgesehen ist, die die zeitliche Bitlänge von über den Sendezweig ausgesendeten und über den Empfangszweig mitgelesenen Signalen auswertet und abhängig von dem Ergebnis der Auswertung softwaremäßig die Bitlänge des Sendezweigs einstellt, wenn die Auswertung über einen definierten Zeitraum hinweg eine Abweichung von einem Sollwert über eine zulässige Toleranz hinaus zeigt.

Nachfolgend soll die vorliegende Erfindung anhand der beiliegenden Zeichnung näher erläutert werden. Es zeigen:
- Fig. 1: schematisch den Aufbau einer bidirektionalen Schnittstelle gemäß der vorliegenden Erfindung;
- Fig. 2: eine mögliche Ausgestaltung der erfindungsgemäßen bidirektionalen Schnittstelle;
- Fig. 3: eine erste Variante zur Korrektur der Bitzeit gemäß der vorliegenden Erfindung und
- Fig. 4: eine zweite Variante einer erfindungsgemäßen Bitzeit-Korrektur.

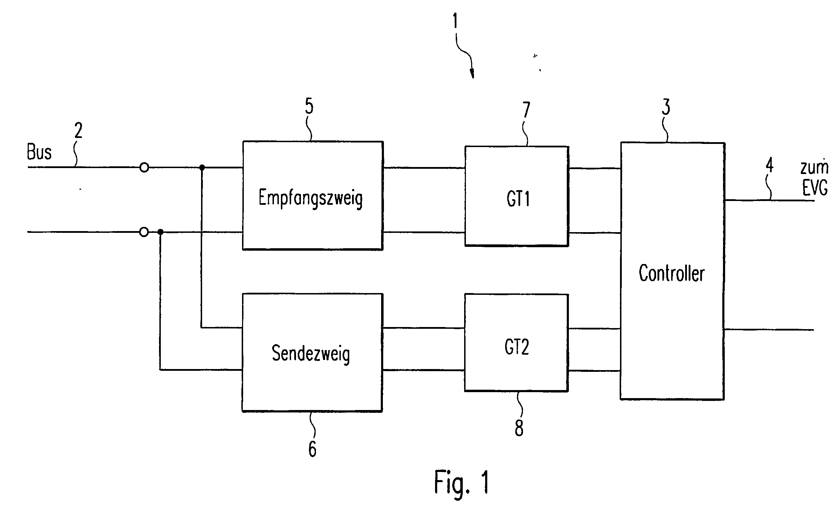

Fig. 1 zeigt zunächst allgemein den Aufbau einer bidirektionalen Schnittstelle 1, die zum Empfang und zur Übermittlung von Daten über die beiden Leitungen eines Busleitungssystems 2 ausgestaltet ist. Der Aufbau dieser Schnittstelle 1 entspricht im wesentlichen dem klassischen Aufbau bidirektionaler Schnittstellen, da die oben erwähnten erfindungsgemäßen Maßnahmen in erster Linie softwaremäßiger Natur sind und nicht den Einsatz zusätzlicher Hardwarekomponenten erfordern.

Ein Bauteil der Schnittstelle 1 ist dementsprechend ein Controller 3, der für den Datenempfang und die Datenübertragung verantwortlich ist und über Ausgangsleitungen 4 mit einem anzusteuernden Gerät in Verbindung steht. Bei dem vorliegenden Ausführungsbeispiel soll davon ausgegangen werden, daß es sich bei dem anzusteuernden Gerät um ein Gerät zum Betreiben von Leuchtmittel handelt, insbesondere für eine Lampe wie bspw. mit einer Gasentladungslampe, LEDs oder Halogen-Leuchtmitteln. Bevorzugt ist ein elektronisches Vorschaltgerät (EVG) für Gasentladungslampen.

Weitere Komponenten der bidirektionalen Schnittstelle sind zum einen ein Empfangszweig 5, der zum Empfangen von auf den Busleitungen 2 liegenden Informationen verantwortlich ist und über ein erstes Element 7 zur galvanischen Trennung mit dem Controller 3 verbunden ist. Für die Übermittlung von Informationen von dem Controller 3 zu den Busleitungen 2 ist ferner ein Sendezweig 6 vorgesehen, der über ein weiteres Element 8 zur galvanischen Trennung mit dem Controller 3 verbunden ist.

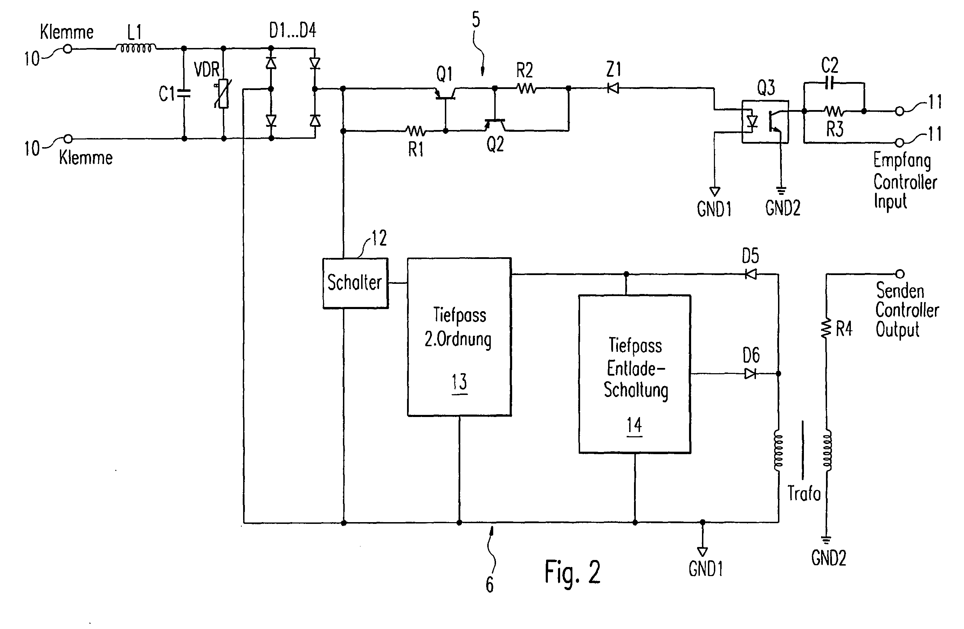

Eine mögliche Ausgestaltung des Sende- und Empfangszweigs sowie der Elemente zur galvanischen Trennung ist in Fig. 2 dargestellt. Eine Besonderheit der in Fig. 2 dargestellten Schaltung besteht dabei darin, daß die Ansteuerung des Sendezweigs nicht - wie bei bislang bekannten bidirektionalen Schnittstellen üblich - über einen Optokoppler sondern über einen Transformator erfolgt. Wie später noch näher erläutert wird, bringt diese Ausgestaltung besondere Vorteile hinsichtlich der Möglichkeiten zur Datenübertragung mit sich. Anzumerken ist allerdings, daß die vorliegende Erfindung keinesfalls auf die in Fig. 2 speziell dargestellte Ausgestaltung einer bidirektionalen Schnittstelle beschränkt ist. Wesentlich zur Realisierung der vorliegenden Erfindung ist lediglich, daß der Empfangszweig in der Lage ist, die von dem Sendezweig auf die Busleitungen gegebenen Signale gleichzeitig mitzulesen und auszuwerten.

Bei der in Fig. 2 dargestellten Schnittstelle handelt es sich um eine digitale bidirektionale Schnittstelle, die über zwei Klemmen 10 mit den beiden Busleitungen des Busleitungssystems verbunden ist und eingangsseitig zunächst ein Dämpfungsnetzwerk bestehend aus einer Induktivität L1, einem Kondensator C1 sowie einem spannungsabhängigen Widerstand VDR aufweist. Die Funktion dieses Netzwerks besteht darin, an den Busleitungen auftretende Transienten, also sehr kurze, schnelle und starke Spannungs- und Stromänderungen zu dämpfen. Dies ist deshalb erforderlich, da die Schnittstelle auch an die normale Netzspannungsleitung anschließbar sein soll und eine Spannungsfestigkeit von bis zu 1000 Volt aufweisen sollte.

An das Dämpfungsnetzwerk schließt sich ein aus vier Dioden D1 bis D4 bestehender Gleichrichter an, dessen Funktion es ist, die an den beiden Anschlußklemmen 10 anliegenden Signale grundsätzlich in gleicher Weise weiterzuleiten, so daß ein Anschluß der beiden Klemmen 10 in beliebiger Weise an die Leitungen des Busleitungssystems erfolgen kann.

Der Empfangszweig 5 der Schnittstelle weist im folgenden eine Schaltungsanordnung aus zwei Transistoren Q1 und Q2 sowie zwei Widerständen R1 und R2 auf, deren Aufgabe es ist, die Stromstärke des zu dem Optokoppler Q3 weitergeleiteten empfangenen Signals auf einen Wert von maximal 2 mA zu beschränken. Dies entspricht den Vorgaben entsprechend dem DALI-Standard. Über eine Diode Z1 werden dementsprechend dann die Signale zu dem Optokoppler Q3 weitergeleitet, der als Element zur galvanischen Trennung dient und die Signale über eine Parallelschaltung bestehend aus einem Kondensator C2 und einem Widerstand R3 schließlich an zwei Ausgangsanschlüsse 11 weiterleitet, die den Empfangszweig der Schnittstelle mit dem Controller verbinden.

Zur Übertragung von Signalen auf die Busleitungen war bei klassischen Schnittstellen bislang ebenfalls ein Optokoppler vorgesehen, der allerdings aufgrund einer extremen Temperaturdrift der sogenannten Current Tranfer Ratio (CTR) nur schlecht geeignet ist, die erforderlichen Toleranzgrenzen für die vorgegebenen Bitzeiten einzuhalten. Ein weiteres Problem eines Optokopplers besteht darin, daß dieser eine zu geringe Überspannungsfestigkeit aufweist.

Bei der in Fig. 2 dargestellten Schaltungsanordnung wird dementsprechend nunmehr als Element zur galvanischen Trennung ein Transformator verwendet, der einen Schalter 12 zur Erzeugung der digitalen Signale an den Anschlußklemmen 10 ansteuert. Der Vorteil des verwendeten Transformators besteht darin, daß dieser die Energie zum Ansteuern des Schalters 12 übertragen kann und die Energie nicht von der Schnittstelle entnommen werden muss.

Aufgrund der speziellen Ausgestaltung können die Anstiegszeit und Abfallzeit der Flanken des Bussignals nahezu unabhängig voneinander eingestellt werden. Dies hat zur Folge, daß die dabei erreichte Qualität des Signals entscheidend verbessert wird, was sowohl die Toleranz der Bitzeiten als auch die Gleichmäßigkeit der Flanken betrifft.

Die Erzeugung von digitalen Signalen an den Anschlußklemmen 10 erfolgt dann wie folgt:

Zur Erzeugung eines Bitsignals wird der Transformator hochfrequent angesteuert und zwar mit einer Frequenz, die in etwa dem 100-fachen der gewünschten Bitzeit entspricht. Mit anderen Worten, während der Übertragungszeit eines einzelnen Bits erfolgt an der Primärwicklung des Transformators in etwa 100 Ma1 ein Spannungswechsel, der auf die Sekundärwicklung übertragen wird.

Die an der Sekundärwicklung des Transformators anliegende hochfrequente Wechselspannung hat zur Folge, daß ein dem Schalter 12 vorgeordneter Tiefpass 2. Ordnung 13 aufgeladen wird, was wiederum bewirkt, daß der Schalter 12, bei dem es sich um einen Feldeffekttransistor handelt, leitend geschaltet wird und dementsprechend ein Bitsignal erzeugt wird.

Der Tiefpass 2. Ordnung 13 ist mit einer Tiefpass-Entladeschaltung 14 verbunden, die permanent versucht, den Tiefpass 2. Ordnung 13 wieder zu entladen. Solange allerdings der Transformator hochfrequent betrieben wird, wird dies durch die beiden Dioden D5 und D6 verhindert. Erst zu dem Zeitpunkt, zu dem an dem Transformator kein hochfrequentes Signal mehr anliegt, kann die Tiefpassentlade-Schaltung 14 den Tiefpass 2. Ordnung 13 entladen, bis aufgrund dessen der Schalter 12 wieder geöffnet und dementsprechend eine ansteigende Signalflanke zur Beendigung des Bitsignals erzeugt wird.

Wesentlich für die vorliegende Erfindung ist, daß ein auf diese Weise erzeugtes Bitsignal gleichzeitig auch über den Empfangszweig 5 der bidirektionalen Schnittstelle empfangen und durch den Controller 3 überwacht wird. Es besteht nunmehr die Möglichkeit, daß der Controller 3 dieses Signal auswertet und - sofern erforderlich - entsprechende Korrekturmaßnahmen vornimmt. Dies soll nachfolgend anhand des Beispiels einer Korrektur der realisierten Bitzeit erläutert werden.

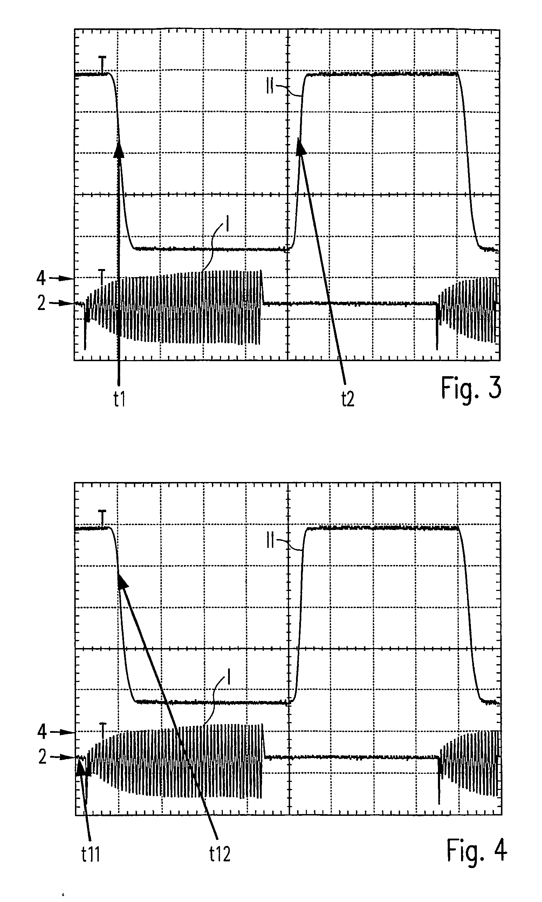

Fig. 3 zeigt dabei zunächst ein erstes Ausführungsbeispiel, wobei schematisch das an dem Transformator anliegende Signal I sowie das daraufhin an den Anschlußklemmen 10 entstehende Bussignal II dargestellt ist.

Die Überwachung und ggf. erforderliche Korrektur der Bitzeit erfolgt nun gemäß der ersten Variante durch Ermittlung der tatsächlichen Bitdauer des Bussignals II. Mit dem Erscheinen einer gesendeten Flanke zum Zeitpunkt t1 am Eingangskanal wird dann beispielsweise im Controller ein Timer gestartet, welcher die Zeit bis zum Erscheinen der ansteigenden Flanke zum Zeitpunkt t2, also bis zum Ende des Bitsignals mißt bzw. zählt. Auf diese Weise ermittelt der Timer die konkrete Zeitdauer eines Bits und errechnet den relativen Bitzeitfehler. Sollte dieser Fehler außerhalb der zulässigen Toleranz liegen, kann für nachfolgend übermittelte Signale eine Korrektur vorgenommen werden, was durch eine softwaremäßige Adaptierung innerhalb des Controllers erfolgt.

Auf diese Weise kann somit eine Korrektur später übermittelter Signale erfolgen, wobei allerdings vorgesehen sein kann, dass Korrekturmaßnahmen nur dann durchgeführt werden, wenn die ausgewertete zeitliche Bitlänge des Sendezweigs über einen definierten Zeitraum hinweg Abweichungen von dem Sollwert zeigt, die über eine zulässige Toleranz hinausgehen.

Ein Nachteil dieser ersten Variante besteht darin, daß für den Fall, daß der anfangs gemessene Fehler größer als die zulässige Toleranz ist, bis zum Wirksamwerden der Korrektur mindestens ein Bit außerhalb der zulässigen Grenzen übermittelt wird und dementsprechend das gesamte übertragene Protokoll fehlerbehaftet ist. Um dies zu vermeiden, ist es dementsprechend bei der ersten Variante erforderlich, ein Testsignal bzw. ein Probeprotokoll zu übermitteln um eventuelle Korrekturen durchführen zu können.

Diese Problematik wird bei dem in Figur 4 dargestellten zweiten Ausführungsbeispiel vermieden, bei dem nicht die tatsächliche Zeit eines gesendeten Bits sondern die Verzögerung eines von dem Controller ausgegebenen Signals zu dem an den Busleitungen entstehenden Bitsignal ermittelt wird. Voraussetzung hierbei ist, daß die Verzögerung der ansteigenden und abfallenden Flanken vom Controller bis zum Bus in einem näherungsweise konstanten Verhältnis steht.

Bei dem zweiten Ausführungsbeispiel wird somit zu einem Zeitpunkt t11 der Timer gestartet, zu dem von dem Controller ein Startsignal zum Betreiben des Transformators ausgegeben wird. Sobald daraufhin an den Anschlußklemmen die abfallende Flanke zum Zeitpunkt t12 auftritt, wird der Timer wieder gestoppt. Die hierbei gemessene Zeit wird dann gegebenenfalls mit dem Faktor, der das Verhältnis der Verzögerung zwischen abfallender und ansteigender Flanke beschreibt, multipliziert und der hieraus berechnete Wert zur ursprünglich vorgegebenen Zeit addiert. Der Zähler für die Bitzeit wird dann mit diesem berechneten Wert neu geladen und gestartet.

Ist beispielsweise für eine Bitzeit von 416 µsec ein Timerloadwert von 2¹⁶ - 416 = 65119(16 Bit Up-Timer, Clockfrequenz 1 µsec notwendig), so wird der Timer zunächst mit diesem Wert geladen und damit die erste (abfallende Flanke) ausgegeben. Mit dem Auftreten der Flanke zum Zeitpunkt t12 am Bus wird der Timerwert gestoppt und die bisher abgelaufenen Zählschritte werden ermittelt (momentaner Timerwert - Startwert). Dieser Differenzwert wird nunmehr mit dem oben erwähnten Faktor (sofern erforderlich) multipliziert, zum Startwert addiert und der Zähler mit diesem Wert neu gestartet. Erreicht der Zähler nun den Endwert, so wird automatisch ein weiteres Ansteuern des Transformators gestoppt, was zur Folge hat, daß die ansteigende Flanke des Bussignals im wesentlichen zu dem idealen Zeitpunkt auftritt. D.h., das hierbei erzeugte Bit-Signal hat genau die vorgeschriebene Länge.

Der Vorteil dieser zweiten Vorgehensweise besteht darin, daß auch das erste Bit bereits mit der richtigen Länge ausgegeben wird und dementsprechend kein vorheriger Abgleich oder die Übermittlung eines Testsignals erforderlich ist. Mit anderen Worten, die Bitlänge wird immer richtig ausgegeben.

Betont werden soll an dieser Stelle nochmals, daß die Erfindung nicht auf das Erzeugen des Bitsignals mit Hilfe des Transformators beschränkt ist. Stattdessen können selbstverständlich die entsprechenden Verzögerungswerte auch bei einem Ansteuern mittels eines Optokopplers ermittelt werden.

Die vorliegende Erfindung gestattet es somit, ohne größeren hardwaremäßigen Aufwand bei bidirektionalen Schnittstellen eine optimale Überwachung der übermittelten Signale zu realisieren und gegebenenfalls Korrekturmaßnahmen durchzuführen.

## Patentansprüche

1. Verfahren zur Kontrolle von Übertragungen in einem Sendezweig (6) einer bidirektionalen Schnittstelle (1), die neben dem Sendezweig (6) auch einen mit dem Sendezweig 6) in Verbindung stehenden Empfangszweig (5) aufweist,
wobei das Verfahren die folgenden Schritte aufweist:
- Aussenden von Information mittels des Sendezweigs (6), und
- Auswerten von definierten Eigenschaften der gesendeten Information über den Empfangszweig (5) der selben Schnittstelle (1).

2. Verfahren nach Anspruch 1,
**dadurch gekennzeichnet,**
**dass** abhängig von der Auswertung der gesendeten Information eine Einstellung von Parametern des Sendezweigs (6) erfolgt, so dass zukünftige Information unter Verwendung dieser Parameter ausgesendet werden.

3. Verfahren nach Anspruch 2,
**dadurch gekennzeichnet,**
**dass** die Schnittstelle eine digitale Schnittstelle (1) ist.

4. Verfahren nach Anspruch 3,
**dadurch gekennzeichnet,**
**dass** die definierten ausgewerteten Eigenschaften die zeitliche Bitlänge der gesendeten Information umfassen.

5. Verfahren nach Anspruch 4,
**dadurch gekennzeichnet,**
**dass** die zeitliche Bitlänge durch Starten eines Zählers bei einer ersten Flanke und Stoppen des Zählers bei der folgenden Flanke erfasst wird.

6. Verfahren nach Anspruch 4,
**dadurch gekennzeichnet,**
**dass** die zeitliche Bitlänge ausgehend von der zeitlichen Differenz zwischen der Eingabe der Startflanke des Bits in die Schnittstelle (1) und der Weitergabe dieser Startflanke auf einen angeschlossenen Bus (2), gemessen mittels des Empfangszweigs (5) ermittelt wird.

7. Verfahren nach einem der Ansprüche 4 bis 6,
**dadurch gekennzeichnet,**
**dass** abhängig von der über den Empfangszweig (5) ausgewerteten Bitlänge die Bitlänge folgender Übertragungen, als Parameter des Sendezweigs (6), softwaremässig eingestellt wird.

8. Verfahren nach Anspruch 4 oder 5,
**dadurch gekennzeichnet,**
**dass** Parameter des Sendezweigs (6) erst dann verändert werden, wenn die ausgewertete zeitliche Bitlänge des Sendezweigs (6) über einen definierten Zeitraum hinweg Abweichungen von einem Sollwert zeigt, die über eine zulässige Toleranz hinausgehen.

9. Verfahren nach Anspruch 1,
wobei zur Kontrolle der zeitlichen Bitlängen in dem Sendezweig die zeitlichen Bitlängen der gesendeten Information über den Empfangszweig (5) derselben Schnittstelle ausgewertet werden.

10. Verfahren nach Anspruch 9,
**dadurch gekennzeichnet,**
**dass** für den Fall, dass die ausgewerteten zeitlichen Bitlängen über einen definierten Zeitraum über ein zulässige Toleranz hinaus von einem Sollwert abweichen, eine Korrektur der Bitlänge in dem Sendezweig (6) erfolgt.

11. Computersoftware-Produkt,
**dadurch gekennzeichnet,**
**dass** es ein Verfahren nach einem der vorhergehenden Ansprüche implementiert, wenn es auf einer Recheneinrichtung läuft.

12. Controller für eine bidirektionale Schnittstelle (1),
**dadurch gekennzeichnet, dass** er zur Durchführung eines Verfahrens nach einem der Ansprüche 1 bis 10 ausgelegt ist.

13. Bidirektionale Schnittstelle, aufweisend:
- einen Sendezweig zur Aussendung von Signalen über einen Bus (2),
- einen Empfangszweig (5) zum Empfangen von Signalen von dem Bus (2), wobei der Empfangszweig (5) mit dem Sendezweig (6) derart verbunden ist, dass von dem Sendezweig (6) ausgesendete Signale über den Empfangszweig (5) mitlesbar sind, und
- eine Steuereinheit (3), die über den Sendezweig (6) ausgesendeten Signale zur Kontrolle definierter Eigenschaften dieser Signale über den Empfangszweig (5) mitliest.

14. Schnittstelle nach Anspruch 13,
**dadurch gekennzeichnet,**
**dass** die Steuereinheit (3) dazu ausgelegt ist, abhängig von dem Ergebnis der Auswertung Parameter des Sendezweigs (6) einzustellen.

15. Schnittstelle nach Anspruch 14,
**dadurch gekennzeichnet,**
**dass** die Schnittstelle eine digitale Schnittstelle (1) ist.

16. Schnittstelle nach einem der Ansprüche 13 bis 15,
**dadurch gekennzeichnet,**
**dass** die definierten ausgewerteten Eigenschaften die zeitliche Bitlänge der gesendeten Information umfassen.

17. Schnittstelle nach Anspruch 16,
**dadurch gekennzeichnet,**
**dass** die Steuereinheit (3) dazu ausgelegt ist, abhängig von der über den Empfangszweig (5) ausgewerteten Bitlänge die Bitlänge folgender Übertragungen, als Parameter des Sendezweigs (6), einzustellen.

18. Schnittstelle nach Anspruch 14 oder 15,
**dadurch gekennzeichnet,**
**dass** die Steuereinheit (3) dazu ausgelegt ist, Parameter des Sendezweigs (6) erst dann zu verändern, wenn die ausgewertete zeitliche Bitlänge des Sendezweigs (6) über einen definierten Zeitraum hinweg Abweichungen von einem Sollwert zeigt, die über eine zulässige Toleranz hinausgehen.

19. Bidirektionale digitale Schnittstelle (1) nach Anspruch 13,
wobei die Steuereinheit (3), die zeitliche Bitlänge von über den Sendezweig (6) ausgesendeten und über den Empfangszweig (5) mitgelesenen Signale auswertet und abhängig von dem Ergebnis der Auswertung softwaremässig die Bitlänge des Sendezweigs (6) einstellt, wenn die Auswertung über einen definierten Zeitraum hinweg eine Abweichung von einem Sollwert über eine zulässige Toleranz hinaus zeigt.

20. Betriebsgerät für Leuchtmittel,
aufweisend eine Schnittstelle (1) nach einem der Ansprüche 13 bis 19.

21. Elektronisches Vorschaltgerät, insbesondere für Gasentladungslampen, aufweisend eine Schnittstelle (1) nach einem der Ansprüche 13 bis 19.

## Claims

1. Method for monitoring transmissions in a transmission branch (6) of a bidirectional interface (1) which, in addition to the transmission branch (6), also has a reception branch (5) connected to the transmission branch (6),
wherein the method comprises the following steps:
- transmitting information via the transmission branch (6), and
- evaluating defined properties of the transmitted information via the reception branch (5) of the same interface (1).

2. Method as claimed in claim 1,
**characterised in that,**
in dependence upon the evaluation of the transmitted information, parameters of the transmission branch (6) are set so that future information is transmitted using these parameters.

3. Method as claimed in claim 2,
**characterised in that**
the interface is a digital interface (1).

4. Method as claimed in claim 3,
**characterised in that**
the defined evaluated properties include the temporal bit length of the transmitted information.

5. Method as claimed in claim 4,
**characterised in that**
the temporal bit length is detected by starting a counter at a first edge and stopping the counter at the following edge.

6. Method as claimed in claim 4,
**characterised in that**
the temporal bit length is determined on the basis of the temporal difference between the input of the start edge of the bit into the interface (1) and the passage of this start edge to an attached bus (2), measured by means of the reception branch (5).

7. Method as claimed in any one of claims 4 to 6,
**characterised in that,**
in dependence upon the bit length evaluated via the reception branch (5), the bit length of subsequent transmissions is set by software as a parameter of the transmission branch (6).

8. Method as claimed in claim 4 or 5,
**characterised in that**
parameters of the transmission branch (6) are changed only when, over a defined period of time, the evaluated temporal bit length of the transmission branch (6) shows deviations from a set value which exceed an admissible tolerance.

9. Method as claimed in claim 1,
wherein in order to monitor the temporal bit lengths in the transmission branch the temporal bit lengths of the transmitted information are evaluated via the reception branch (5) of the same interface.

10. Method as claimed claim 9,
**characterised in that**
a correction of the bit length is carried out in the transmission branch (6) if the evaluated temporal bit lengths deviate from a set value beyond an admissible tolerance over a defined period of time.

11. Computer software product
**characterised in that**
it implements a method as claimed in any one of the preceding claims when it runs on a computing device.

12. Controller for a bidirectional interface (1)
**characterised in that**
it is arranged to carry out a method as claimed in any one of claims 1 to 10.

13. Bidirectional interface comprising:
- a transmission branch for transmitting signals via a bus (2),
- a reception branch (5) for receiving signals from the bus (2), wherein the reception branch (5) is connected to the transmission branch (6) in such a way that signals transmitted by the transmission branch (6) can also be read via the reception branch (5), and
- a control unit (3) which also reads the signals transmitted via the transmission branch (6), via the reception branch (5) in order to control defined properties of these signals.

14. Interface as claimed in claim 13,
**characterised in that**
the control unit (3) is arranged to set parameters of the transmission branch (6) in dependence upon the result of the evaluation.

15. Interface as claimed in claim 14,
**characterised in that**
the interface is a digital interface (1).

16. Interface as claimed in any one of claims 13 to 15,
**characterised in that**
the defined evaluated properties include the temporal bit length of the transmitted information.

17. Interface as claimed in claim 16,
**characterised in that**
the control unit (3) is arranged to set the bit length of subsequent transmissions as a parameters of the transmission branch (6) in dependence upon the bit length evaluated via the reception branch (5).

18. Interface as claimed in claim 14 or 15,
**characterised in that**
the control unit (3) is arranged to change parameters of the transmission branch (6) only when, over a defined period of time, the evaluated temporal bit length of the transmission branch (6) shows deviations from a set value which exceed an admissible tolerance.

19. Bidirectional digital interface (1) as claimed in claim 13,
wherein the control unit (3) evaluates the temporal bit length of signals transmitted via the transmission branch (6) and also read via the reception branch (5), and, in dependence upon the result of the evaluation, sets the bit length of the transmission branch (6) by means of software when the evaluation shows a deviation from a set value in excess of an admissible tolerance over a defined period of time.

20. Operating device for a lighting means,
comprising an interface (1) as claimed in any one of claims 13 to 19.

21. Electronic control gear, in particular for gas discharge lamps, comprising an interface (1) as claimed in any one of claims 13 to 19.

## Revendications

1. Procédé pour contrôler les transmissions dans une branche d'émission (6) d'une interface bidirectionnelle (1), qui présente outre la branche d'émission (6) également une branche de réception (5) qui est en liaison avec la branche d'émission (6),
le procédé présentant les étapes suivantes :
- émettre des informations par l'intermédiaire de la branche d'émission (6), et
- analyser des propriétés définies des informations envoyées, via la branche de réception (5) de cette même interface (1).

2. Procédé selon la revendication 1,
**caractérisé en ce que,** en fonction de l'analyse des informations envoyées, un réglage de paramètres de la branche d'émission (6) a lieu, de sorte que des informations ultérieures sont émises en utilisant ces paramètres.

3. Procédé selon la revendication 2,
**caractérisé en ce que** l'interface est une interface numérique (1).

4. Procédé selon la revendication 3,
**caractérisé en ce que** les propriétés définies analysées comprennent la durée de bit de l'information envoyée.

5. Procédé selon la revendication 4,
**caractérisé en ce que** la durée de bit est détectée par le démarrage d'un compteur suite à une première pente et l'arrêt du compteur suite à la pente suivante.

6. Procédé selon la revendication 4,
**caractérisé en ce que** la durée de bit est déterminée à partir de la différence temporelle entre l'entrée dans l'interface (1) de la pente de démarrage du bit et la transmission de cette pente de démarrage vers un bus (2) connecté, la différence étant mesurée par l'intermédiaire de la branche de réception (5).

7. Procédé selon l'une des revendications 4 à 6,
**caractérisé en ce que,** en fonction de la durée de bit analysée via la branche de réception (5), la durée de bit de transmissions ultérieures en tant que paramètre de la branche d'émission (6) est ajustée par logiciel.

8. Procédé selon la revendication 4 ou 5,
**caractérisé en ce que** des paramètres de la branche d'émission (6) ne sont modifiés que lorsque la durée de bit analysée de la branche d'émission (6) affiche des écarts par rapport à une valeur de consigne sur une période définie, lesquels écarts dépassent une tolérance autorisée.

9. Procédé selon la revendication 1,
dans lequel, pour contrôler les durées de bit dans la branche d'émission, les durées de bit de l'information envoyée sont analysées via la branche de réception (5) de la même interface.

10. Procédé selon la revendication 9,
**caractérisé en ce que,** au cas où les durées de bit analysée s'écartent de plus qu'une tolérance autorisée par rapport à une valeur de consigne sur une période définie, une correction de la durée de bit a lieu dans la branche d'émission (6).

11. Produit programme d'ordinateur,
**caractérisé en ce qu'**il implémente un procédé selon l'une des revendications précédentes lorsqu'il tourne sur un processeur.

12. Contrôleur pour une interface bidirectionnelle (1),
**caractérisé en ce qu'**il est adapté pour exécuter un procédé selon l'une des revendications 1 à 10.

13. Interface bidirectionnelle, présentant :
- une branche d'émission pour émettre des signaux via un bus (2),
- une branche de réception (5) pour recevoir des signaux du bus (2), la branche de réception (5) étant connectée à la branche d'émission (6) de telle sorte que des signaux émis par la branche d'émission (6) peuvent être lus via la branche de réception (5), et
- une unité de commande (3) qui lit via la branche de réception (5) les signaux émis par la branche d'émission (6) pour contrôler des propriétés définies de ces signaux.

14. Interface selon la revendication 13,
**caractérisée en ce que** l'unité de commande (3) est adaptée pour ajuster des paramètres de la branche d'émission (6) en fonction du résultat de l'analyse.

15. Interface selon la revendication 14,
**caractérisée en ce que** l'interface est une interface numérique (1).

16. Interface selon l'une des revendications 13 à 15,
**caractérisée en ce que** les propriétés définies analysées comprennent la durée de bit de l'information envoyée.

17. Interface selon la revendication 16,
**caractérisée en ce que** l'unité de commande (3) est adaptée pour ajuster, en fonction de la durée de bit analysée via la branche de réception (5), la durée de bit de transmissions ultérieures en tant que paramètre de la branche d'émission (6).

18. Interface selon la revendication 14 ou 15,
**caractérisée en ce que** l'unité de commande (3) est adaptée pour ne modifier des paramètres de la branche d'émission (6) que lorsque la durée de bit analysée de la branche d'émission (6) affiche sur une période définie des écarts par rapport à une valeur de consigne, qui dépassent une tolérance autorisée.

19. Interface selon la revendication 13,
dans laquelle l'unité de commande (3) analyse la durée de bit de signaux émis par la branche d'émission (6) et lus via la branche de réception (5) et, en fonction du résultat de l'analyse, ajuste par logiciel la durée de bit de la branche d'émission (6), lorsque l'analyse montre sur une période définie un écart supérieur à une tolérance autorisée par rapport à une valeur de consigne.

20. Appareil d'alimentation pour moyen d'éclairage,
présentant une interface (1) selon l'une des revendications 13 à 19.

21. Ballast électronique, en particulier pour lampes à décharge de gaz, présentant une interface (1) selon l'une des revendications 13 à 19.
